# FASCICULE DE BREVET EUROPEEN

(11) **EP 3 863 412 B1**
(45) Date de publication et mention de la délivrance du brevet: **05.10.2022**
(21) Numéro de dépôt: 19823788.5
(22) Date de dépôt: 09.10.2019
(51) Int. Cl.: A23C 21/00, A23C 9/144, B01D 61/02, B01D 61/44, C02F 1/44, C02F 1/46, C02F 9/00, B01D 61/58

(54) **PROCÉDÉ DE TRAITEMENT D'EFFLUENTS DE DÉMINÉRALISATION DE LACTOSERUM**
VERFAHREN ZUR BEHANDLUNG VON MOLKEENTMINERALISIERUNGSABWÄSSERN
METHOD FOR TREATING WHEY DEMINERALISATION EFFLUENTS

(30) Priorité: 09.10.2018 FR 1859360
(43) Date de publication de la demande: 18.08.2021
(73) Titulaire: Synutra France International, 29270 Carhaix-Plouguer (FR)
(72) Inventeur: CHAVERON, Michel, 1814 LA TOUR DE PEILZ (CH)
(74) Mandataire: Plasseraud IP
(86) Numéro de dépôt international: PCT/FR2019/052384
(87) Numéro de publication internationale: WO 2020/074823

(56) Documents cités:
- EP-A1- 0 115 992
- EP-A1- 2 745 704
- EP-B1- 2 745 704
- US-A1- 2009 142 459
- REIG MÒNICA ET AL: "Selectrodialysis and bipolar membrane electrodialysis combination for industrial process brines treatment: Monovalent-divalent ions separation and acid and base production", DESALINATION, ELSEVIER, AMSTERDAM, NL, vol. 399, 24 août 2016 (2016-08-24), pages 88-95, XP029743601, ISSN: 0011-9164, DOI: 10.1016/J.DESAL.2016.08.010

## Description

La présente invention se rapporte au domaine du traitement des effluents de déminéralisation, plus particulièrement au recyclage de tels effluents, et concerne un procédé de déminéralisation de lactosérum et de traitement des effluents produits, ainsi qu'une installation en tant que telle convenant pour la mise en œuvre du procédé.

Le lactosérum est la partie liquide issue de la coagulation du lait, ladite coagulation étant provoquée par la dénaturation de la caséine, protéine majoritaire du lait. Il existe deux types de coagulation, menant chacune à deux types de lactosérum différents. En effet, selon que la coagulation est une coagulation lactique ou une coagulation présure, le lactosérum obtenu est respectivement qualifié de lactosérum acide ou de lactosérum doux. Le lactosérum est également appelé lactosérum de fromagerie ou petit-lait.

La valorisation du lactosérum représente depuis bien longtemps des enjeux aussi bien économiques qu'écologiques. En effet, bien que sa composition soit intéressante, le lactosérum possède une Demande Chimique en Oxygène (DCO) de 50 g/L à 70 g/L, ce qui en fait un produit organique polluant ne pouvant être rejeté dans la nature et dont le transport est coûteux en raison de son caractère très dilué (extrait sec 5 à 6 %).

C'est ainsi qu'au fil du temps, des voies de valorisation ont vu le jour, notamment par l'intermédiaire des procédés de déminéralisation permettant d'obtenir du lactosérum déminéralisé.

Le lactosérum déminéralisé, liquide ou en poudre, constitue de nos jours le principal composant des produits infantiles et diététiques, en particulier des laits succédanés du lait maternel. Le lactosérum déminéralisé a également d'autres applications, notamment par exemple en tant qu'ingrédient de remplacement du lait écrémé en confiserie-chocolaterie ou dans la fabrication des laits reconstitués.

Différentes techniques peuvent être envisagées pour la déminéralisation du lactosérum, en particulier l'ultrafiltration, l'osmose inverse, la nanofiltration, l'électrodialyse et l'échange d'ions. Les trois premières techniques étant bien trop spécifiques, seules les deux dernières ont trouvé une réelle application à l'échelle industrielle. Ainsi, les procédés de déminéralisation du lactosérum les plus efficaces à l'heure actuelle mettent en œuvre l'électrodialyse et l'échange d'ions, qui sont appliquées séparément ou en combinaison. L'électrodialyse est une technique électrochimique qui permet d'éliminer sélectivement les sels ionisés d'une solution par migration sous l'action d'un champ électrique à travers des membranes sélectivement perméables aux cations et aux anions. Selon cette technique, les sels ionisés en solution dans le lactosérum migrent sous l'effet d'un champ électrique à travers des membranes sélectivement perméables aux cations et aux anions et sont éliminés sous forme d'effluents de déminéralisation ou saumures.

L'échange d'ions est une technique basée sur le principe des équilibres ioniques existant entre une phase solide et une phase liquide et fait appel à des phénomènes d'absorption et d'exclusion. Ainsi, selon cette technique, on utilise l'équilibre ionique entre une résine en tant que phase solide et le lactosérum à déminéraliser en tant que phase liquide, les ions étant absorbés sur la résine de même nature lors de la phase de saturation, puis les résines sont ensuite régénérées.

Cependant, à l'échelle industrielle, les procédés de déminéralisation de lactosérum génèrent des quantités très importantes d'effluents, et notamment d'effluents salins.

La gestion de ces effluents constitue un problème d'importance cruciale dans le contexte de la réduction de l'impact des procédés sur l'environnement. Ces déchets liquides, qui appartiennent à la catégorie des Déchets Industriels Spéciaux (DIS), présentent des difficultés de traitement qui ont conduit les industriels à recourir notamment à des sociétés externes, spécialisées dans la gestion de ce type de déchets.

Cette pratique présente certains avantages mais pose cependant quelques problèmes. Au-delà de l'aspect purement économique lié au coût de traitement, le stockage et le transport de ces effluents présentent un risque sensible pour l'environnement. Par ailleurs, le traitement délocalisé par rapport au site de production interdit tout recyclage.

De plus, la présence de sels réduit considérablement l'efficacité des traitements mis en œuvre pour permettre le rejet dans le milieu naturel de ces effluents de déminéralisation, comme par exemple les traitements biologiques ou physico-chimiques.

Une autre solution mise en œuvre par les industriels est l'envoi des effluents en station d'épuration. Cependant, cette pratique pose également des problèmes de coûts et des problèmes environnementaux.

EP0115992A1 divulgue un procédé de traitement de saumure issue de la déminéralisation par électrodialyse, contenant des produits nobles et des sels ionisables caractérisé en ce qu'on soumet cette saumure à une opération de désionisation à l'aide de résine échangeuse d'ions appropriée et on effectue sur la solution obtenue une opération d'osmose inverse qui en sépare les produits nobles.

Ainsi, il existe un besoin de développer des procédés permettant de traiter tout ou partie des effluents de déminéralisation afin de limiter aussi l'impact environnemental que de diminuer les risques et les coûts liés au transport et au stockage de ces effluents.

L'objectif de la présente invention est donc de fournir un procédé permettant de traiter les effluents de déminéralisation afin de diminuer leur impact environnemental. Avantageusement, ce traitement peut permettre de recycler une partie de la saumure et entraine ainsi une diminution du coût de fonctionnement des procédés de déminéralisation de lactosérum.

Il est ainsi du mérite de la Demanderesse d'avoir trouvé que cet objectif pouvait être atteint par l'intermédiaire d'un procédé de traitement particulier pouvant être directement mis en œuvre sur le site industriel de déminéralisation des lactosérums.

Un premier objet de l'invention concerne un procédé de traitement des effluents de déminéralisation de lactosérum.

La présente invention a ainsi pour objet un procédé de traitement d'effluents de déminéralisation de lactosérum comprenant les étapes suivantes de :
i) fourniture d'un effluent de déminéralisation de lactosérum,
ii) traitement par osmose inverse de l'effluent récupéré à l'étape i) de manière à obtenir un perméat et un rétentat d'osmose inverse,
iii) neutralisation du rétentat d'osmose inverse à un pH compris de 6 à 9,
iv) traitement par nanofiltration du rétentat neutralisé d'osmose inverse de manière à obtenir un perméat de nanofiltration comprenant principalement les ions monovalents et un rétentat de nanofiltration comprenant principalement les ions divalents,
v) traitement par électrodialyse sur membrane bipolaire du perméat de nanofiltration obtenu à l'étape iv) de manière à séparer au moins une solution acide et au moins une solution basique.

La première étape du procédé consiste donc en une étape i) de fourniture d'un effluent de déminéralisation de lactosérum.

Par effluents de déminéralisation, on entend au sens de la présente invention les résidus liquides issus pendant la déminéralisation du lactosérum, autres que le lactosérum déminéralisé en tant que tel. Il peut ainsi s'agir des effluents issus de la déminéralisation des lactosérums par électrodialyse et/ou d'échange d'ions.

Selon un mode de réalisation particulier, il s'agit d'effluents issus de la déminéralisation des lactosérums par électrodialyse, lesdits effluents étant également connus sous le terme de saumure.

L'étape ii) du procédé selon l'invention consiste à traiter par osmose inverse les effluents fournis à l'étape i) de manière à obtenir un perméat et un rétentat d'osmose inverse.

L'osmose inverse est un procédé connu de l'homme du métier permettant la séparation en phase liquide par perméation à travers des membranes semi-sélectives sous l'effet d'un gradient de pression. L'écoulement s'effectue en continu tangentiellement à la membrane. Une partie des effluents à traiter se divise au niveau de la membrane en deux parties de concentrations différentes : le perméat, qui passe au travers de la membrane, et le rétentat qui ne passe pas et qui contient les molécules ou particules retenues par la membrane.

L'étape ii) du procédé selon l'invention permet ainsi de concentrer l'effluent de déminéralisation du lactosérum via la production d'un rétentat d'une part, et d'un perméat d'autre part.

L'étape d'osmose inverse peut être réalisée jusqu'à l'obtention d'un facteur de concentration volumique (FCV) dans le rétentat compris de 3 à 5. De préférence, l'osmose inverse peut être réalisée jusqu'à l'obtention d'un FCV dans le rétentat environ égal à 4.

Le rétentat d'osmose inverse obtenu peut présenter un taux de cendres compris de 3 à 7 %, de préférence de 4 à 6 %. Au sens de la présente invention, on entend par « *cendres* », le produit résultant de l'incinération de la matière sèche du rétentat. Selon la présente invention, le taux de cendres est déterminé selon la norme NF 04-208.

Le procédé comprend ensuite une étape iii) de neutralisation du rétentat d'osmose inverse à un pH compris de 6 à 9. La neutralisation peut par exemple être indépendamment réalisée par l'intermédiaire d'une solution d'hydroxyde de potassium, d'hydroxyde de sodium, d'hydroxyde de calcium ou leurs mélanges.

Dans une première variante de cette étape, le rétentat d'osmose inverse est neutralisé à un pH compris entre 6,5 et 9. Selon cette variante, la neutralisation du rétentat entraîne la formation de phosphate di et tricalcique qui précipite sous forme de cristaux. En effet, les inventeurs ont constatés qu'à partir d'un pH de 6,5, un précipité est obtenu quelle que soit la solution basique utilisée pour la neutralisation. Une étape de séparation mécanique peut alors avantageusement être mise en œuvre afin d'éliminer le précipité de phosphate di et tricalcique et de limiter ainsi l'encrassement et la détérioration des membranes lors de l'étape ultérieure de nanofiltration. L'étape de séparation mécanique est réalisée selon les moyens connus de l'homme du métier, par la mise en œuvre d'un décanteur ou d'une centrifugeuse, c'est alors le surnageant qui est mis en œuvre pour la suite du procédé selon l'invention.

Dans une deuxième variante de cette étape, le rétentat d'osmose inverse est neutralisé à un pH compris de 6 à 6,4 et la mise en œuvre d'une étape de séparation mécanique n'est alors pas nécessaire car les phosphates se trouvent principalement sous forme soluble mono et di calcique qui restent en apparence solubles.

La quatrième étape iv) du procédé consiste ensuite en un traitement par nanofiltration du rétentat neutralisé d'osmose inverse des effluents de déminéralisation de lactosérum afin de séparer les ions monovalents des ions bivalents et d'éliminer également la majorité des matières organiques résiduelles telles que par exemple les acides organiques, peptides, acides aminés ou encore le lactose.

La nanofiltration est également une technique connue de l'homme du métier. C'est une méthode de séparation de composés contenu dans un liquide via l'utilisation de membrane semi-perméable dont le diamètre des pores peut varier par exemple de 1 à 10 nm.

Selon cette étape iv) du procédé de traitement, le rétentat neutralisé obtenue à l'étape iii) est traité par l'intermédiaire d'une nanofiltration de manière à obtenir un perméat de nanofiltration comprenant principalement les ions monovalents, et un rétentat de nanofiltration comprenant principalement les ions divalents.

L'étape de nanofiltration peut être réalisée jusqu'à l'obtention d'un facteur de concentration volumique (FCV) dans le rétentat compris de 2 à 4. De préférence, la nanofiltration peut être réalisée jusqu'à l'obtention d'un FCV dans le rétentat environ égal à 3.

Selon un mode de réalisation particulier, le rétentat comprenant les ions divalents est avantageusement revalorisé en alimentation animale.

Enfin, la cinquième étape v) du procédé consiste à traiter le perméat de nanofiltration contenant principalement les ions monovalents obtenu à l'étape iv) par l'intermédiaire d'une électrodialyse sur membrane bipolaire de manière à obtenir au moins une solution acide et au moins une solution basique.

L'électrodialyse sur membrane bipolaire, ou électrodialyse bipolaire, est une technique connue de l'homme du métier qui permet à la différence de l'électrodialyse conventionnelle de dissocier les ions H⁺ et OH⁻ contenus en solution et de convertir ainsi des solutions salines en acides et en bases.

Cette étape d'électrodialyse bipolaire est réalisée jusqu'à l'obtention d'une conductivité du perméat comprise de 0,2 mS/cm à 1,2 mS/cm.

Le procédé selon l'invention permet ainsi de traiter les effluents de déminéralisation et d'obtenir notamment des solutions acides et basiques qui peuvent être avantageusement utilisées pour d'autres applications industrielles.

Un second objet de l'invention concerne un procédé de déminéralisation de lactosérum et de traitement des effluents produits comprenant les étapes suivantes de :
a) fourniture d'un lactosérum,
b) acidification du lactosérum à un pH compris de 2,0 à 3,5,
c) électrodialyse du lactosérum acidifié,
d) récupération de la saumure d'électrodialyse de l'étape c) et mise en œuvre d'un procédé de traitement des effluents de déminéralisation selon l'invention, ledit effluent de déminéralisation de l'étape i) étant ladite saumure d'électrodialyse.

Selon la présente invention, le lactosérum peut être un lactosérum doux ou un lactosérum acide.

Dans le contexte de la présente invention, le lactosérum acide peut être le liquide obtenu par coagulation du lait via une acidification provoquée par le métabolisme des bactéries lactiques. D'une manière générale, la composition du lactosérum acide se présente comme suit :
- lactose : 4,0 - 5,0 %
- protéines : 0,6 - 0,7 %
- sels minéraux (principalement Na^{+,} K⁺ et Ca²⁺): 0,7 - 0,8 %
- matières grasses : 0,05 - 0,1 %
- teneur en matière sèche (extrait sec total) : 5,3 - 6,0 %
- acidité : pH 4,3 - 4,6

Dans le contexte de la présente invention, on désigne par lactosérum doux, le liquide obtenu après coagulation de la caséine par la présure lors de la fabrication de fromage. Comme mentionné précédemment, le lactosérum doux est un co-produit connu issu de l'industrie fromagère. D'une manière générale, la composition du lactosérum doux se présente comme suit :
- lactose : 4,0 - 5,0 %
- protéines : 0,6 - 0,8 %
- sels minéraux (principalement Na^{+,} K⁺ et Ca²⁺): 0,4 - 0,6 %
- matières grasses : 0,2 - 0,4 %
- teneur en matière sèche (extrait sec total) : 5,3 - 6,6 %
- acidité : pH 5,9 - 6,5

Selon un mode de réalisation préféré, le lactosérum fournit est un lactosérum doux. Selon ce mode de réalisation, le lactosérum doux peut être sous forme brute ou sous forme concentrée. De même, il peut également s'agir d'un lactosérum reconstitué à partir d'une poudre de lactosérum.

Selon une variante de ce mode de réalisation préféré, le lactosérum doux est un lactosérum doux concentré, avantageusement concentré thermiquement dans des conditions de chauffage modéré jusqu'à l'obtention d'un extrait sec compris entre 18 à 25 %. De préférence, le lactosérum doux présente un extrait sec de 18 à 23 %, et tout particulièrement environ 20 % d'extrait sec. Le lactosérum peut également être défini par ses caractéristiques de conductivité et son taux de cendres. Selon ce mode de réalisation, le lactosérum concentré fourni présente une conductivité Ω comprise de 13,5 à 14,5 mS/cm à 20°C et un taux de cendres compris de 7,8 à 8,4 %.

L'étape b) du procédé consiste à acidifier le lactosérum fournit. L'acidification est réalisée de manière à diminuer et à maintenir le pH du lactosérum à une valeur comprise de 2,0 à 3,5. De préférence, le pH du lactosérum est abaissé et maintenu à une valeur comprise de 2,5 à 3,2, et de préférence encore, à une valeur environ égale à 3. L'acidification peut être réalisée par l'intermédiaire des moyens connus de l'homme du métier comme par exemple l'utilisation d'une solution d'acide chlorhydrique (HCl).

Cette acidification du lactosérum présente plusieurs avantages, notamment pour l'efficacité de l'électrodialyse. D'une part, l'efficacité est augmentée car les bas pH favorisent l'ionisation des sels divalents et trivalents présents dans le lactosérum et augmente ainsi par exemple la disponibilité du calcium ou du magnésium. D'autre part, cela permet d'abaisser la viscosité du lactosérum et entraine un meilleur passage des ions au travers des membranes d'électrodialyse. De ce fait, l'encrassement des membranes est diminué et leur durée de vie est augmentée. De plus, le maintien du lactosérum à un pH compris entre 2 et 3,5 permet d'assurer la stabilité thermique des protéiques sériques en évitant leur floculation et leur dénaturation lors d'une étape de pasteurisation à haute température. Ce point est particulièrement intéressant pour le maintien de la qualité nutritionnelle du lactosérum déminéralisé. D'une manière avantageuse, le pH acide évite également tout développement bactériologique lors de l'opération de déminéralisation.

Enfin, le maintien des conditions acides selon l'invention dans le procédé de déminéralisation est également avantageux en ce qu'il permet de diminuer la consommation d'eau et de produits chimiques.

Selon un mode de réalisation particulier, le procédé peut également comprendre une étape b') de pasteurisation du lactosérum acidifié avant l'étape c) de déminéralisation. La pasteurisation permet de réduire de manière significative le nombre de micro-organismes présents dans le lactosérum, et notamment d'éliminer les germes les plus résistants, tels que les germes sporulés et thermorésistants, sans toutefois altérer pour autant les protéines. Cette étape de pasteurisation est réalisée à une température comprise entre 90°C et 125°C et pendant une durée comprise entre 5 secondes et 30 minutes.

Ensuite, l'étape c) du procédé de déminéralisation de lactosérum et de traitement des produits consiste en une étape d'électrodialyse du lactosérum acidifié, de manière à produire un diluat et un concentrat.

Le diluat correspond au lactosérum déminéralisé tandis que le concentrat fait référence à la solution concentrée en sels également appelée effluent de déminéralisation ou saumure.

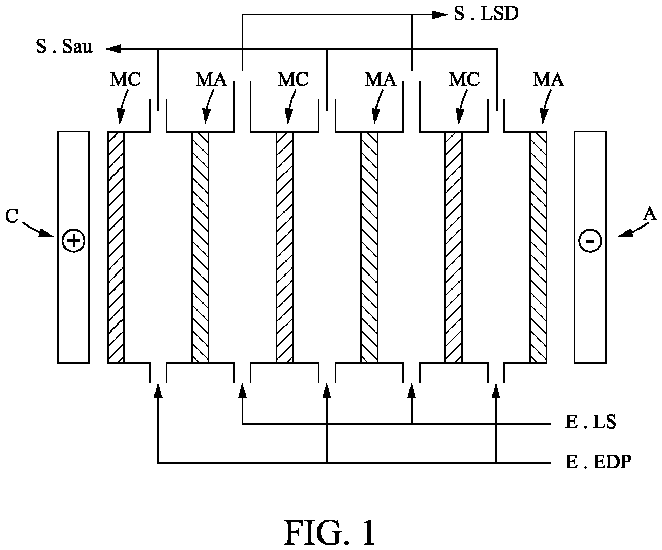

L'électrodialyse selon cette étape, dite électrodialyse conventionnelle, est une technique connue de l'homme du métier qui peut par exemple être réalisée telle que présentée par la figure 1. L'électrodialyseur comprend des compartiments séparés les uns des autres par des membranes alternativement anioniques et cationiques. Un premier compartiment contient le lactosérum à déminéraliser tandis que l'autre contient de l'eau acidifiée à un pH de 1,5 à 3,5. Lors de l'action du champ électrique de part et d'autre de l'électrodialyseur par l'intermédiaire d'électrodes, les cations sortent du premier compartiment en franchissant la membrane cationique et sont bloqués dans le deuxième compartiment par la membrane anionique. Les anions sortent aussi du premier compartiment en migrant vers la membrane anionique et sont bloqués par la membrane cationique. Par conséquent, le premier compartiment voit sa concentration en sels dissous diminuer tandis que le deuxième compartiment voit sa concentration en sels dissous augmenter. Un compartiment est en dilution, l'autre en concentration, l'autre en dilution, l'autre en concentration et ainsi de suite.

Cette étape d'électrodialyse peut être réalisée à une température comprise de 30°C à 60°C, de préférence à une température comprise de 35°C à 55°C, et de préférence encore, à une température comprise de 40°C à 50°C. Par exemple, cette étape d'électrodialyse peut être réalisée à une température d'environ 45°C.

L'étape d'électrodialyse est mise en œuvre jusqu'à atteindre le taux de déminéralisation souhaité, à savoir pour cette étape un taux de déminéralisation d'au moins 70 %, d'au moins 75 %, d'au moins 80 %, d'au moins 85 %, et tout particulièrement, un taux de déminéralisation d'environ 90 %. De préférence, l'électrodialyse est réalisée de manière à obtenir un taux de déminéralisation d'environ 90 %.

L'expression « *taux de déminéralisation* », représente le rapport des quantités de sels minéraux éliminés du lactosérum (c'est-à-dire la différence entre les quantités de sels minéraux du lactosérum de départ et les quantités résiduelles du lactosérum déminéralisé) aux quantités de sels minéraux du lactosérum de départ, ramenés aux mêmes pourcentages de matière sèche.

L'homme du métier peut apprécier le taux de déminéralisation du lactosérum par l'intermédiaire de la conductivité. De plus, le taux de cendres du lactosérum déminéralisé peut également être un indicateur du taux de déminéralisation atteint. Au sens de la présente invention, on entend par « *cendres* », le produit résultant de l'incinération de la matière sèche du lactosérum. Selon la présente invention, le taux de cendres est déterminé selon la norme NF 04-208.

L'étape d'électrodialyse peut ainsi être réalisée de manière à obtenir une conductivité du lactosérum acidifié et concentré à 20% d'extrait sec, comprise entre 2,0 et 3,0 mS/cm, et/ou un taux de cendres compris de 2,2 à 2,6 %/extrait Sec, ce qui correspond à un taux de déminéralisation d'environ 70 %.

Selon un mode de réalisation particulier, l'électrodialyse est réalisée de manière à obtenir une conductivité du lactosérum concentré à 20% d'extrait sec comprise entre 1,0 et 1,5 mS/cm, et/ou un taux de cendres compris de 0,6 à 1,2 %/extrait sec ce qui correspond à un taux de déminéralisation d'environ 90 %. Pour se faire, lorsque la conductivité du lactosérum acidifié atteint entre 2,0 et 3,0 mS/cm pendant l'électrodialyse, cette dernière doit être mise en pause le temps que le lactosérum soit neutralisé à un pH compris de 6 à 7. Dès lors, l'électrodialyse est relancée jusqu'à la conductivité cible de 1,0 et 1,5 mS/cm.

Selon un mode de réalisation particulier, le procédé de déminéralisation de lactosérum et de traitement des effluents produits comprend une étape e) de récupération du lactosérum déminéralisé.

La saumure de l'électrodialyse ainsi produite selon cette étape c) est alors récupérée et mise en œuvre dans le procédé de traitement des effluents de déminéralisation selon l'invention tel que précédemment défini.

Ainsi, ladite saumure récupérée est l'effluent de déminéralisation de lactosérum fourni à l'étape i). En résumé, le procédé de déminéralisation de lactosérum et de traitement des effluents produits comprend les étapes suivantes de :
a) fourniture d'un lactosérum,
b) acidification du lactosérum à un pH compris de 2,0 à 3,5,
c) électrodialyse du lactosérum acidifié,
d) récupération de la saumure d'électrodialyse de l'étape c) et mise en œuvre d'un procédé de traitement des effluents de déminéralisation comprenant les étapes suivantes de :
   ii) traitement par osmose inverse de la saumure d'électrodialyse de manière à obtenir un perméat et un rétentat d'osmose inverse,
   iii) neutralisation du rétentat d'osmose inverse à un pH compris de 6 à 9,
   iv) traitement par nanofiltration du rétentat neutralisé d'osmose inverse de manière à obtenir un perméat de nanofiltration comprenant principalement les ions monovalents et un rétentat de nanofiltration comprenant principalement les ions divalents,
   v) traitement par électrodialyse sur membrane bipolaire du perméat de nanofiltration obtenu à l'étape iv) de manière à séparer au moins une solution acide et au moins une solution basique.

Selon un mode de réalisation particulièrement avantageux, le procédé de déminéralisation de lactosérum et de traitement des effluents comprend en outre une étape de recyclage de toute ou partie du perméat d'osmose inverse de l'étape ii) comme eau de process pour l'étape c) d'électrodialyse du lactosérum acidifié où du lactosérum doux.

Selon un autre mode de réalisation particulièrement avantageux, le procédé de déminéralisation de lactosérum et de traitement des effluents comprend en outre une étape de recyclage de toute ou partie de la solution acide séparée après l'électrodialyse sur membrane bipolaire d'après l'étape v) pour l'acidification du lactosérum selon l'étape b).

Selon un autre mode de réalisation particulièrement avantageux, le procédé de déminéralisation de lactosérum et de traitement des effluents comprend en outre une étape de recyclage de toute ou partie de la solution basique séparée après l'électrodialyse sur membrane bipolaire d'après l'étape v) pour la neutralisation du rétentat d'osmose inverse selon l'étape iii) et/ou pour la neutralisation du lactosérum déminéralisé produit à l'étape c) d'électrodialyse.

Au sens de la présente invention, l'expression « eau de process » est considérée comme synonyme du terme « saumure » sauf lorsque le contexte permettra clairement d'identifié que cela n'est pas le cas.

Comme précédemment mentionné, les quantités de saumure produites à l'échelle industrielle par l'intermédiaire de la déminéralisation des lactosérums sont très importantes. Le procédé selon l'invention permet ainsi de traiter ces effluents, de limiter leur impact au niveau environnemental et de générer des solutions qui peuvent être utilisées dans le procédé de déminéralisation de lactosérum en tant que tel. Avantageusement, cela permet également de diminuer le coût de la déminéralisation des lactosérums puisqu'une partie de l'eau de process de l'électrodialyse provient du traitement des effluents générés. Le procédé selon l'invention permet de diminuer la quantité totale d'effluent envoyée en station d'épuration.

Un troisième objet de l'invention concerne une installation convenant pour la mise en œuvre du procédé de déminéralisation de lactosérum et de traitement des effluents selon l'invention tel que défini précédemment.

Une telle installation comprend ainsi:
- un premier équipement d'électrodialyse comprenant une première entrée destinée à recevoir le lactosérum, une deuxième entrée destinée à recevoir l'eau de process, une première sortie pour le lactosérum déminéralisé et une deuxième sortie pour l'effluent de déminéralisation,
- un système de traitement des effluents comprenant :
   - un équipement d'osmose inverse comprenant une première entrée pour l'effluent de déminéralisation connectée à la deuxième sortie de l'équipement d'électrodialyse, une première sortie pour le perméat d'osmose inverse, et une deuxième sortie pour le rétentat d'osmose inverse,
   - un équipement de neutralisation comprenant une première entrée pour le rétentat d'osmose inverse connectée à la deuxième sortie de l'équipe d'osmose inverse, une deuxième entrée pour une solution de neutralisation, et une sortie pour le rétentat d'osmose inverse neutralisé,
   - un équipement de nanofiltration comprenant une entrée pour le rétentat d'osmose inverse neutralisé connectée directement à la sortie de l'équipement de neutralisation ou indirectement par l'intermédiaire d'un équipement de séparation mécanique, une première sortie pour le rétentat neutralisé de nanofiltration et une deuxième sortie pour le perméat de nanofiltration,
   - un deuxième équipement d'électrodialyse sur membrane bipolaire présentant une entrée pour le perméat de nanofiltration et connectée à la deuxième sortie de l'équipement de nanofiltration, une première sortie pour une solution acide, une deuxième sortie pour une solution basique,
ledit système de traitement d'effluents comprenant tout ou partie des moyens de recyclage suivants:
- un moyen reliant la première sortie pour le perméat d'osmose inverse de l'équipement d'osmose inverse avec la deuxième entrée du premier équipement d'électrodialyse et/ou,
- un moyen reliant la première sortie pour une solution acide du deuxième équipement d'électrodialyse sur membrane bipolaire avec la deuxième entrée du premier équipement d'électrodialyse et/ou,
- un moyen reliant la deuxième sortie pour une solution basique du deuxième équipement d'électrodialyse sur membrane bipolaire avec la deuxième entrée pour une solution de neutralisation de l'équipement de neutralisation et/ou avec la première sortie pour un lactosérum déminéralisé du premier équipement d'électrodialyse.

Le premier équipement d'électrodialyse permet la mise en œuvre de l'étape c) du procédé selon l'invention de manière à déminéraliser le lactosérum jusqu'à taux de déminéralisation souhaité. Cet équipement comprend une première entrée destinée à recevoir le lactosérum, une deuxième entrée destinée à recevoir la solution d'eau de process, une première sortie pour le lactosérum déminéralisé et une deuxième sortie pour la saumure ou effluent de déminéralisation. L'eau de process est l'eau utilisée pour alimenter l'électrodialyseur. Cette eau constitue en fin d'électrodialyse l'effluent de déminéralisation tel que décrit précédemment.

L'installation selon l'invention comprend également un système de traitement ayant pour objectif, par la mise en œuvre d'une succession d'équipements, de traiter la saumure produite par la déminéralisation du lactosérum.

Le système de traitement comprend ainsi un équipement d'osmose inverse. Cet équipement permet de mettre en œuvre l'étape ii) du procédé selon l'invention de manière à générer à partir de la saumure un perméat d'osmose inverse et un rétentat d'osmose inverse. L'équipement d'osmose inverse comprend une première entrée pour l'effluent de déminéralisation connectée à la deuxième sortie de l'équipement d'électrodialyse, une première sortie pour le perméat d'osmose inverse, et une deuxième sortie pour le rétentat d'osmose inverse reliée à l'équipement de neutralisation.

L'équipement de neutralisation permet de mettre en œuvre l'étape iii) du procédé selon l'invention et de neutraliser le rétentat d'osmose inverse avant que ce dernier ne soit traité par un équipement de nanofiltration. Cet équipement comprend une première entrée pour le rétentat d'osmose inverse connectée à la deuxième sortie de l'équipe d'osmose inverse, une deuxième entrée pour une solution de neutralisation, ainsi qu'une sortie pour le rétentat d'osmose inverse neutralisé, ladite sortie étant connectée à un équipement de nanofiltration ou un équipement de séparation mécanique.

Cet équipement de neutralisation permet de neutraliser le pH du rétentat d'osmose inverse de 6 à 9. Dans le cas où le pH est neutralisé de 6 à 6,4, la sortie de l'équipement de neutralisation peut être directement connectée à la première entrée de l'équipement de nanofiltration. Cependant, dans le cas où le pH est neutralisé de 6,5 à 9, la sortie de l'équipement de neutralisation est connectée à un équipement de séparation mécanique afin de supprimer dans le rétentat le précipité de phosphate tricalcique.

L'équipement de séparation mécanique comprend ainsi une entrée pour le rétentat d'osmose inverse neutralisé et une sortie pour le surnageant de séparation exempt de phosphate tricalcique. La sortie de l'équipement de séparation mécanique est alors connectée à l'entrée de l'équipement de nanofiltration.

L'équipement de nanofiltration permet de mettre en œuvre l'étape iv) du procédé de traitement selon l'invention afin d'obtenir un perméat de nanofiltration comprenant principalement les ions monovalents et un rétentat de nanofiltration comprenant principalement les ions divalents. Cet équipement comprend une entrée pour le rétentat d'osmose inverse neutralisé connectée directement à la sortie de l'équipement de neutralisation ou à la sortie de l'équipement de séparation mécanique, une première sortie pour le rétentat neutralisé de nanofiltration et une deuxième sortie pour le perméat de nanofiltration.

Enfin, le système de traitement comprend un équipement d'électrodialyse sur membrane bipolaire permettant de mettre en œuvre l'étape v) du procédé selon l'invention. Cet équipement est similaire au premier équipement d'électrodialyse à la différence qu'il contient également des membranes bipolaires et permet ainsi à partir d'une solution saline d'obtenir des solutions acides et basiques en raison de la dissociation des ions H⁺ et OH⁺. L'équipement d'électrodialyse bipolaire comprend ainsi une entrée pour le perméat de nanofiltration et connectée à la deuxième sortie de l'équipement de nanofiltration, une première sortie pour une solution acide et une deuxième sortie pour une solution basique.

L'installation selon l'invention est particulièrement avantageuse en ce que le système de traitement comprend également un ou plusieurs moyens de recyclage. En effet, un premier moyen de recyclage peut relier la première sortie de l'équipement d'osmose inverse avec la deuxième entrée du premier équipement d'électrodialyse. Ce premier moyen de recyclage permet ainsi de recycler toute ou partie du perméat d'osmose inverse généré par l'équipement d'osmose inverse comme eau de process au niveau de l'équipement d'électrodialyse.

Un deuxième moyen de recyclage peut relier la première sortie de l'équipement d'électrodialyse sur membrane bipolaire avec la deuxième entrée du premier équipement d'électrodialyse. Ce deuxième moyen permet ainsi de recycler toute ou partie de la solution acide générée par l'équipement l'électrodialyse sur membrane bipolaire pour l'acidification du lactosérum selon l'étape b) du procédé de déminéralisation du lactosérum et de traitement des effluents.

Enfin, un troisième moyen de recyclage peut relier la deuxième sortie de l'équipement d'électrodialyse sur membrane bipolaire avec la deuxième entrée de l'équipement de neutralisation et/ou la première sortie pour un lactosérum déminéralisé du premier équipement d'électrodialyse. Ce troisième moyen permet de recycler toute ou partie de la solution basique générée par l'équipement d'électrodialyse sur membrane bipolaire pour la neutralisation du rétentat d'osmose inverse dans l'équipement de neutralisation et/ou pour neutraliser le lactosérum en fin de déminéralisation.

L'invention sera mieux comprise à l'aide des exemples qui suivent qui se veulent purement illustratif et ne limitent en rien la portée de la protection.

### EXEMPLES

### Exemple 1 :

Cet exemple a pour objectif de mettre en œuvre le procédé de traitement d'effluent de déminéralisation selon l'invention.

### A. Fourniture de l'effluent de déminéralisation:

L'effluent traité selon cet exemple est une saumure issue de la déminéralisation d'un lactosérum doux présentant les concentrations en ions et les caractéristiques reprises dans le tableau 1 ci-dessous :

**Tableau 1.1**

| | |
|---|---|
| Extrait sec (%) | 21,8 |
| pH | 6,7 |
| Conductivité (mS/cm) | 20,28 |

La saumure récupérée présente un pH de 2,4 et les concentrations en ions sont telles que présentées dans le tableau 1.2 suivant :

**Tableau 1.2**

| | K⁺ | Na⁺ | Ca2⁺ | Mg2⁺ | Cl⁻ | P | Cendres (%) |
|---|---|---|---|---|---|---|---|
| Concentrations (mg/100g liquide) | 674 | 163 | 62 | 13 | 808 | 77 | 1,9 |

### B. Traitement de la saumure générée par la déminéralisation du lactosérum doux

### Osmose inverse :

La saumure obtenue suite à la déminéralisation lactosérum doux est traitée par osmose inverse selon l'étape b) du procédé de l'invention. L'osmose inverse est réalisée à partir de 40 L de saumure jusqu'à l'obtention d'un facteur de concentration de concentration volumique (FCV) dans le rétentat égal à 4. Le volume final dans le rétentat est alors de 10L et le volume final dans le perméat est de 30L.

Les caractéristiques de l'osmose inverse sont présentées dans le tableau 1.3 ci-dessous :

**Tableau 1.3**

| Membrane | AG 1812 (GE Membranes) |
|---|---|
| Pression cible (bar) | 30 |
| Débit (L/h) | 900 |
| Volume initial (L) | 40 |
| FCV visé | 4 |
| Volume final rétentat (L) | 10 |
| Volume final perméat (L) | 30 |
| Température | 45°C |

La DCO, le pourcentage d'extrait sec, le taux de cendres, le pH ainsi que les concentrations (mg/100g) des différents ions dans le rétentat ont été mesurés à différents FCV et jusqu'à l'FCV cible sont présentés dans le tableau 1.4 ci-dessous :

**Tableau 1.4**

| FCV | K | Na | Ca | Mg | Cl | P | DCO | ES % | Cendres % | pH |
|---|---|---|---|---|---|---|---|---|---|---|
| 1,00 | 610 | 148 | 66 | 13 | 776 | 74 | 569 | 2,6 | 1,9 | 2,53 |
| 1,33 | 820 | 191 | 83 | 17 | 1100 | 100 | 817 | 3,3 | 2,4 | 2,55 |
| 2 | 1189 | 278 | 129 | 24 | 1413 | 140 | 1300 | 4,6 | 3,3 | 2,58 |
| 4 | 1979 | 474 | 217 | 37 | 2310 | 244 | 2128 | 7,7 | 5,5 | 2,61 |

Cette étape d'osmose inverse est reproduite deux autres fois dans les mêmes conditions afin d'obtenir 20 litres supplémentaires de rétentat et d'amener ainsi le volume total du rétentat d'osmose inverse obtenu à 30 litres.

### Nanofiltration :

Le rétentat d'osmose inverse est ensuite neutralisé à 20°C jusqu'à pH 7 avec une solution de NaOH à 40% en poids et un précipité de phosphate tricalcique se forme.

Les 30 Litres de rétentat d'osmose inverse sont alors décanté pendant 12 heures et 21 L de surnageant sont obtenus. Ce sont donc les 21 L de surnageant qui sont ensuite nanofiltrés.

La nanofiltration est réalisée jusqu'à l'obtention d'un facteur de concentration volumique égal à 3 dans le perméat de nanofiltration. Les caractéristiques de la nanofiltration sont présentées ci-dessous :

**Tableau 1.5**

| Membrane | DK 1812 (GE Membrane) |
|---|---|
| Pression cible (bar) | 25 |
| Débit (L/h) | 900 |
| Volume initial (L) | 21 |
| FCV visé | 3 |
| Volume final rétentat (L) | 10 |
| Volume final perméat (L) | 20 |
| Température | 20°C |

La nanofiltration des 21L de surnageant permet d'obtenir 14L de perméat de nanofiltration contenant seulement les ions monovalents comme K⁺ et Na⁺.

La DCO, le pourcentage d'extrait sec, le taux de cendres (%), le pH ainsi que les concentrations (mg/100g) des différents ions dans le perméat ont été mesurés et sont présentés le tableau 1.4 ci-dessous :

**Tableau 1.6**

| FCV | K | Na | Ca | Mg | Cl | P | DCO | ES | Cendres | pH |
|---|---|---|---|---|---|---|---|---|---|---|
| 1,0 | 1484 | 853 | 77 | 25 | 1904 | 119 | 1554 | 6,6 | 5,2 | 6,47 |
| 3,0 | 2204 | 1147 | 150 | 59 | 1655 | 288 | 3004 | 10,3 | 4,9 | 6,52 |

### Electrodialyse sur membrane bipolaire :

Le perméat de nanofiltration est ensuite traité par électrodialyse sur membrane bipolaire. Le traitement se fait dans cet exemple en deux étapes.

La première étape commence avec un volume de 7L de perméat dans le compartiment d'alimentation, 5L d'eau dans le compartiment acide, et 5L d'eau dans le compartiment basique.

L'électrodialyse est lancée afin de diminuer la conductivité du perméat, initialement égale à 50 mS/cm, à une valeur inférieure à 0,5 mS/cm.

Dès que la conductivité de 0,5 mS/cm est atteinte, une deuxième étape est réalisée avec 7 nouveaux litres de perméat dans le compartiment d'alimentation. L'acide et la base produits sont en revanche inchangés pour pouvoir permettre de les concentrer plus encore. L'objectif de conductivité pour l'alimentation est le même que pour la première étape.

En fin d'électrodialyse, la conductivité finale mesurée du perméat est de 1,1 mS/cm, la solution d'acide présente une concentration égale à 1,08 mol/L et la solution basique une concentration de 0,87 mol/L.

Les valeurs des conductivités du perméat sont reprises dans le tableau 1.7 ci-après :

**Tableau 1.7**

| | Conductivité (mS/cm) |
|---|---|
| Début 1^{er} étape | 50,0 |
| Fin 1^{er} étape | 0,51 |
| Début 2^{eme} étape | 50,0 |
| Fin 2^{eme} étape | 1,09 |

Voici ci-dessous les concentrations en solution acide et en solution basique obtenues à la fin des étapes 1 et 2 :

**Tableau 1.8**

| | Unité | Acide | Base |
|---|---|---|---|
| Etape 1 | Mol/L d'H⁺ | 0,61 | 0,43 |
| | % massique d'HCl | 2,2 | 3,9 |
| Etape 2 | Mol/L d'OH⁻ | 1,08 | 0,87 |
| | % massique de NaOH | 1,7 | 3,5 |

Enfin, tableau 1.9 suivant présente les compositions minérales (mg/100g de liquide) de la solution acide et basique à la fin de chaque étape :

**Tableau 1.9**

| | | K | Na | Ca | Mg |
|---|---|---|---|---|---|
| Etape 1 | Solution Acide | 22 | 87 | 4,4 | 1,3 |
| | Solution Basique | 6 | 705 | 5,9 | 0 |
| Etape 2 | Solution Acide | 229 | 201 | 5,3 | 1,4 |
| | Solution Basique | 2006 | 1208 | 5,2 | 0 |

En fin d'électrodialyse bipolaire, le rapport molaire entre les concentrations en potassium et en sodium dans la solution basique est de 49/51 (K/Na). La base produite semble donc être une solution basique composée de potasse et de soude dans un rapport molaire 50/50.

Le procédé selon l'invention permet ainsi de traiter la saumure issue de la déminéralisation de lactosérum afin d'obtenir notamment des solutions acides et basiques qui peuvent être réutilisées pour d'autres applications.

### Exemple 2 :

Cet exemple a pour objectif, à partir d'un lactosérum différent de l'exemple 1, de mettre en œuvre le procédé de déminéralisation de lactosérum et de traitement des effluents produits selon l'invention.

### A. Production de l'effluent de déminéralisation de lactosérum:

Le lactosérum doux utilisé pour la déminéralisation présente les concentrations en ions et les caractéristiques reprises dans le tableau 2.1 ci-dessous :

**Tableau 2.1**

| | |
|---|---|
| Extrait sec (%) | 23,0 |
| pH | 6,2 |
| Conductivité (mS/cm) | 22,05 |

Le lactosérum doux est alors acidifié en début de déminéralisation jusqu'à pH 3 avec une solution d'acide produite à l'exemple 1.

A partir de 19,7L de lactosérum, une première étape d'électrodialyse est réalisée jusqu'à l'obtention d'une conductivité du lactosérum d'environ 3 mS/cm.

Le lactosérum est ensuite neutralisé jusqu'à pH 6,2 avec la solution basique produite à l'exemple 1, puis une deuxième étape d'électrodialyse est réalisée jusqu'à diminuer la conductivité du lactosérum à environ 1,6 mS/cm.

Les concentrations en ions (mg/100g d'extrait sec) dans le lactosérum au début et en fin d'électrodialyse (ED) sont reprises dans le tableau 2.2 suivant :

**Tableau 2.2**

| | K | Na | Ca | Mg | Cl | P | Cendres (%) |
|---|---|---|---|---|---|---|---|
| Concentration début ED | 2692 | 700 | 600 | 117 | 3878 | 570 | 8,48 |
| Concentration fin ED | 203 | 181 | 240 | 66 | 42 | 222 | 1,61 |

Le circuit de saumure de l'électrodialyseur contient initialement 20 L d'eau de process qui ne sont pas changés entre les deux étapes de d'électrodialyse. En fin d'électrodialyse, la saumure est récupérée et présente un pH de 2,4.

Les concentrations en ions dans la saumure ont été mesurées au début et en fin d'électrodialyse sont reprises ci-après :

**Tableau 2.3**

| | K | Na | Ca | Mg | Cl | P | Cendres (%) |
|---|---|---|---|---|---|---|---|
| début d'électrodialyse (en mg/100g liquide) | 0 | 3 | 8 | 0 | 3 | 1 | 0,54 |
| fin d'électrodialyse (en mg/100g liquide) | 610 | 203 | 71 | 13 | 823 | 74 | 1,89 |

### B. Recyclage de la saumure générée par la déminéralisation du lactosérum

### Osmose inverse :

De la même manière que pour l'exemple 1, l'osmose inverse est réalisée à partir de 40 L de saumure jusqu'à l'obtention d'un facteur de concentration volumique (FCV) dans le rétentat égal à 4. Le volume final dans le rétentat est alors de 10L et le volume final dans le perméat est de 30L. Cette étape d'osmose inverse est reproduite deux fois afin d'obtenir 20 L de rétentat supplémentaires. Le volume total du rétentat d'osmose inverse ainsi obtenu est de 30 Litres.

Les caractéristiques de l'osmose inverse sont identiques à celles de l'exemple 1.

Les concentrations (mg/100g) des différents ions dans le rétentat mesurées à différents FCV:

**Tableau 2.4**

| FCV | K | Na | Ca | Mg | Cl | P | DCO | ES | Cendres % | pH |
|---|---|---|---|---|---|---|---|---|---|---|
| 1,00 | 540 | 169 | 69 | 12 | 768 | 70 | 459 | 2,6 | 1,69 | 2,48 |
| 1,33 | 658 | 216 | 85 | 15 | 950 | 91 | / | 3,4 | 2,27 | 2,45 |
| 2,00 | 954 | 309 | 119 | 22 | 1397 | 129 | / | 4,7 | 3,08 | 2,55 |
| 4,00 | 1564 | 491 | 189 | 33 | 1986 | 198 | 1353 | 6,9 | 4,85 | 2,53 |

### Nanofiltration :

Le rétentat d'osmose inverse est ensuite neutralisé jusqu'à pH 8,6 avec une solution de KOH/NaOH à 0,5M de KOH et 0,5M de NaOH reconstituée à partir de la solution basique obtenue à l'exemple 1. Un précipité de phosphate tricalcique se forme.

Le rétentat d'osmose inverse est alors décanté pendant 12 heures et 17 L de surnageant sont obtenus. Ce sont donc les 17 L de surnageant qui sont ensuite nanofiltrés.

La nanofiltration est réalisée jusqu'à l'obtention d'un facteur de concentration volumique égal à 3 dans le perméat de nanofiltration. Les caractéristiques de la nanofiltration sont identiques à celles de l'exemple 1.

Les concentrations en ions dans le rétentat de nanofiltration sont reprises ci-dessous :

**Tableau 2.5**

| FCV | K | Na | Ca | Mg | Cl | P | DCO | ES % | Cendres % |
|---|---|---|---|---|---|---|---|---|---|
| 1,0 | 80 7 | 392 | 1 | 0 | 1219 | 1 | 2 | 2,7 | 2,50 |
| 1,5 | 10 64 | 496 | 1 | 0 | 1540 | 1 | / | 3,4 | 3,17 |
| Global (3) | 98 9 | 465 | 1 | 0 | 1639 | 1 | 4 | 3,2 | 3,07 |

La nanofiltration des 17 L de surnageant permet d'obtenir 11,5 L de perméat de nanofiltration contenant seulement les ions monovalents comme K⁺ et Na⁺.

### Electrodialyse sur membrane bipolaire :

Le perméat de nanofiltration est ensuite traité par électrodialyse sur membrane bipolaire selon le même protocole que l'exemple 1, par un traitement en deux étapes.

La première étape commence avec un volume de 5,5L de perméat dans le compartiment d'alimentation, 5L d'eau dans le compartiment acide, et 5L d'eau dans le compartiment basique.

L'électrodialyse est lancée afin de diminuer la conductivité du perméat, initialement égale à 50 mS/cm, à une valeur inférieure à 1 mS/cm.

La deuxième étape est réalisée avec 5,5 nouveaux litres de perméat dans le compartiment d'alimentation. Les solutions d'acide et de base produites sont en revanche inchangées afin de permettre leur concentration. L'objectif de conductivité pour l'alimentation est le même que pour la première étape, à savoir une conductivité inférieure à 1 mS/cm.

En fin d'électrodialyse, la conductivité finale mesurée du perméat est de 0,7 mS/cm, la solution d'acide présente une concentration égale à 0,69 mol/L et la solution basique une concentration de 0,64 mol/L.

Les valeurs des conductivités du perméat sont reprises dans le tableau 2.6 ci-après :

**Tableau 2.6**

| | Conductivité (mS/cm) |
|---|---|
| Début 1^{er} étape | 50,0 |
| Fin 1^{er} étape | 0,7 |
| Début 2^{eme} étape | 46 |
| Fin 2^{eme} étape | 0,7 |

Voici ci-dessous les concentrations en solution acide et en solution basique obtenues à la fin des étapes 1 et 2 :

**Tableau 2.7**

| | Unité | Acide | Base |
|---|---|---|---|
| Etape 1 | Mol/L d'H⁺ | 0,34 | 0,32 |
| | % massique d'HCl | 1,2 | 1,3 |
| Etape 2 | Mol/L d'OH⁻ | 0,69 | 0,64 |
| | % massique de NaOH | 2,5 | 2,6 |

Enfin, le tableau 2.8 suivant présente les compositions minérales (mg/100g de liquide) de la solution acide et basique à la fin de chaque étape :

**Tableau 2.8**

| | | K | Na |
|---|---|---|---|
| Etape 1 | Solution Acide | 37 | 33 |
| | Solution Basique | 604 | 332 |
| Etape 2 | Solution Acide | 67 | 46 |
| | Solution Basique | 1308 | 658 |

En fin d'électrodialyse bipolaire, le rapport molaire entre les concentrations en potassium et en sodium dans la solution basique est de 54/46 (K/Na). La base produite semble donc être une solution basique composée de potasse et de soude dans un rapport molaire 50/50.

Le procédé selon l'invention permet ainsi de déminéraliser du lactosérum et de traiter la saumure afin d'obtenir notamment des solutions acides et basiques qui peuvent être réutilisées dans ledit procédé de déminéralisation en tant que tel limitant ainsi les rejets en station d'épuration.

### Exemple 3

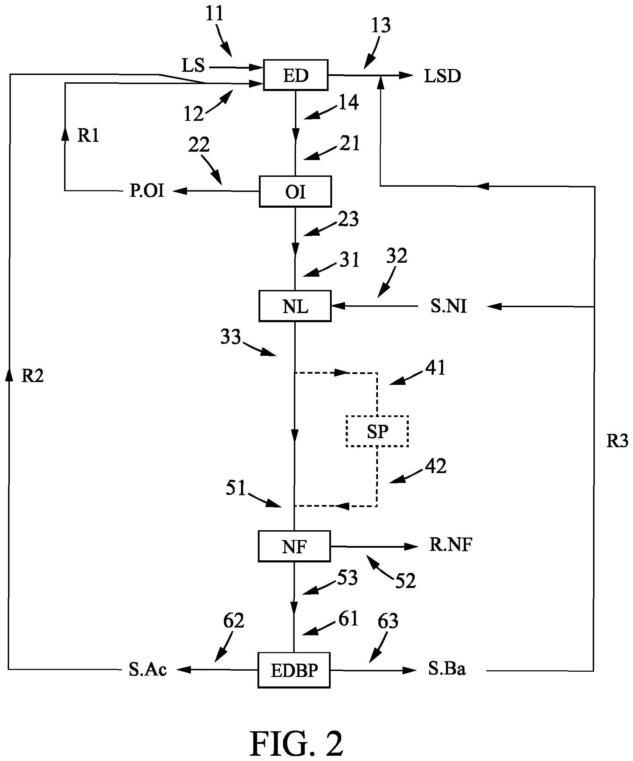

Cet exemple a pour objectif de présenter une installation convenant pour la mise en œuvre du procédé selon l'invention. Ladite installation est présentée schématiquement sur la figure 2 et comprend :
- un premier équipement d'électrodialyse ED comprenant une première entrée 11 destinée à recevoir le lactosérum, une deuxième entrée 12 destinée à recevoir l'eau de process, une première sortie 13 pour le lactosérum déminéralisé et une deuxième sortie 14 pour l'effluent de déminéralisation,
- un système de traitement des effluents comprenant :
   - un équipement d'osmose inverse OI comprenant une entrée 21 pour l'effluent de déminéralisation connectée à la deuxième sortie 14 de l'équipement d'électrodialyse, une première sortie 22 pour le perméat d'osmose inverse, et une deuxième sortie 23 pour le rétentat d'osmose inverse,
   - un équipement de neutralisation NL comprenant une première entrée 31 pour le rétentat d'osmose inverse connectée à la deuxième sortie 23 de l'équipement d'osmose inverse, une deuxième entrée 32 pour une solution de neutralisation, et une sortie 33 pour le rétentat d'osmose inverse neutralisé,
   - un équipement de nanofiltration NF comprenant une entrée 51 pour le rétentat d'osmose inverse neutralisé connectée directement à la sortie 33 de l'équipement de neutralisation, une première sortie 52 pour le rétentat neutralisé de nanofiltration et une deuxième sortie 53 pour le perméat de nanofiltration,
   - un deuxième équipement d'électrodialyse sur membrane dipolaire EDBP présentant une entrée 61 pour le perméat de nanofiltration et connectée à la deuxième sortie 53 de l'équipement de nanofiltration NF, une première sortie 62 pour une solution acide, une deuxième sortie 63 pour une solution basique,
ledit système comprenant des moyens de recyclage comprenant tout ou partie des moyens suivants:
- un moyen R1 reliant la première sortie 22 pour le perméat d'osmose inverse de l'équipement d'osmose inverse avec la deuxième entrée 12 du premier équipement d'électrodialyse ED destinée à recevoir l'eau de process et/ou,
- un moyen R2 reliant la première sortie 62 pour une solution acide du deuxième équipement d'électrodialyse sur membrane bipolaire EDBP avec la deuxième entrée 12 du premier équipement d'électrodialyse et/ou,
- un moyen R3 reliant la deuxième sortie 63 pour une solution basique du deuxième équipement d'électrodialyse sur membrane bipolaire EDBP avec la deuxième entrée 42 de l'équipement de neutralisation NL et/ou avec la première sortie 13 du premier équipement d'électrodialyse ED.

Dans le cas où la neutralisation est réalisée à un pH de 6,5 à 9, la sortie 33 pour le rétentat d'osmose inverse neutralisé de l'équipement de neutralisation NL est reliée par une conduite à l'entrée 41 de l'équipement de séparation mécanique, et la sortie 42 de ce même équipement est reliée par une conduite à l'entrée 51 de l'équipement de nanofiltration.

Dans le cas où le procédé est réalisé en continu, les connections et les moyens de liaisons entre les différentes entrées et sorties des équipements sont assurées par des conduites.

### Nomenclature des figures :

**A :** Anode
**C :** Cathode
**SP :** équipement de séparation mécanique
**E.EDP** : entrée pour l'eau de process
**E.LS :** entrée pour le lactosérum
**ED :** équipement d'électrodialyse
**EDBP :** équipement d'électrodialyse sur membrane bipolaire
**LS :** Lactosérum
**LSD :** Lactosérum déminéralisé
**MA :** membrane anionique
**MC :** membrane cationique
**NF :** équipement de nanofiltration
**NL :** équipement de neutralisation
**OI** : équipement d'osmose inverse
**P.OI :** perméat d'osmose inverse
**R.NF :** Rétentat de nanofiltration
**S.Ac :** Solution acide
**S.Ba :** Solution basique
**S.LSD** : sortie pour le lactosérum déminéralisé
**S.NI :** Solution de neutralisation
**S.Sau :** sortie pour la saumure
**R1** : premier moyen de recyclage
**R2** : deuxième moyen de recyclage
**R3** : troisième moyen de recyclage
**11 :** première entrée pour un lactosérum
**12 :** deuxième entrée pour l'eau de process
**13 :** première sortie pour un lactosérum déminéralisé
**14 :** deuxième sortie pour un effluent de déminéralisation
**21 :** entrée pour un effluent de déminéralisation
**22 :** première sortie pour un perméat d'osmose d'inverse
**23 :** deuxième sortie pour un rétentat d'osmose inverse
**31** : première entrée pour un rétentat d'osmose inverse
**32** : deuxième entrée pour une solution de neutralisation
**33** : sortie pour un rétentat d'osmose inverse neutralisé
**41** : entrée pour un rétentat d'osmose inverse neutralisé
**42** : sortie pour un surnageant de séparation exempt de phosphate tricalcique
**51** : entrée pour un rétentat d'osmose inverse neutralisé
**52** : première sortie pour un rétentat de nanofiltration
**53** : deuxième sortie pour un perméat de nanofiltration
**61** : entrée pour un perméat de nanofiltration
**62** : première sortie pour une solution acide
**63** : deuxième sortie pour une solution basique

## Revendications

1. Procédé de traitement d'effluents de déminéralisation de lactosérum comprenant les étapes suivantes de :
i) fourniture d'un effluent de déminéralisation de lactosérum,
ii) traitement par osmose inverse de l'effluent récupéré à l'étape i) de manière à obtenir un perméat et un rétentat d'osmose inverse,
iii) neutralisation du rétentat d'osmose inverse à un pH compris de 6 à 9,
iv) traitement par nanofiltration du rétentat neutralisé d'osmose inverse de manière à obtenir un perméat de nanofiltration comprenant les ions monovalents et un rétentat de nanofiltration comprenant les ions divalents et les matières organiques résiduelles,
v) traitement par électrodialyse sur membrane bipolaire du perméat de nanofiltration obtenu à l'étape iv) de manière à obtenir au moins une solution acide et au moins une solution basique.

2. Procédé selon la revendication 1, **caractérisé en ce que** l'effluent de déminéralisation de lactosérum est une saumure d'électrodialyse de lactosérum, de préférence de lactosérum doux.

3. Procédé selon les revendications 1 ou 2, **caractérisé en ce que** l'étape ii) est réalisée de manière à obtenir un facteur de concentration volumique (FCV) dans le rétentat compris de 3 à 5.

4. Procédé selon l'une des revendications 1 à 3, **caractérisé en ce que** la neutralisation à l'étape iii) est réalisée à un pH compris de 6,5 à 9 et **en ce que** qu'il comprend également une étape de séparation mécanique du rétentat neutralisé de manière à éliminer le précipité de phosphate tricalcique, l'étape iv) de nanofiltration étant alors réalisée sur le surnageant de séparation exempt de phosphate tricalcique.

5. Procédé selon l'une des revendications 1 à 4, **caractérisé en ce que** l'étape v) d'électrodialyse sur membrane bipolaire est réalisée de manière à obtenir une conductivité du perméat comprise de 0,2 à 1,2 mS/cm.

6. Procédé de déminéralisation de lactosérum et de traitement des effluents produits comprenant les étapes suivantes de :
a) fourniture d'un lactosérum,
b) acidification du lactosérum à un pH compris de 2,0 à 3,5,
c) électrodialyse du lactosérum acidifié,
d) récupération de la saumure d'électrodialyse et mise en œuvre d'un procédé de traitement des effluents de déminéralisation selon l'une des revendications 1 à 5, ledit effluent de déminéralisation à l'étape i) étant ladite saumure d'électrodialyse.

7. Procédé selon la revendication 6, **caractérisé en ce qu'**il comprend en outre une étape de recyclage de toute ou partie de la solution acide séparée après l'électrodialyse sur membrane bipolaire d'après l'étape v) pour l'acidification du lactosérum selon l'étape b).

8. Procédé selon les revendications 6 ou 7, **caractérisé en ce qu'**il comprend en outre une étape de recyclage de toute ou partie de la solution basique séparée après l'électrodialyse sur membrane bipolaire d'après l'étape v) pour la neutralisation du rétentat d'osmose inverse selon l'étape iii).

9. Procédé selon l'une des revendications 6 à 8, **caractérisé en ce qu'**il comprend en outre une étape de recyclage de toute ou partie du perméat d'osmose inverse de l'étape ii) comme eau de process pour l'étape c) d'électrodialyse du lactosérum acidifié.

10. Installation convenant pour la déminéralisation de lactosérum et de traitement des effluents produits, ladite installation comprenant :
- un premier équipement d'électrodialyse (ED) comprenant une première entrée (11) destinée à recevoir le lactosérum, une deuxième entrée (12) destinée à recevoir l'eau de process, une première sortie (13) pour le lactosérum déminéralisé et une deuxième sortie (14) pour l'effluent de déminéralisation,
- un système de traitement des effluents comprenant :
- un équipement d'osmose inverse (OI) comprenant une entrée (21) pour l'effluent de déminéralisation connectée à la deuxième sortie (14) de l'équipement d'électrodialyse, une première sortie (22) pour le perméat d'osmose inverse, et une deuxième sortie (23) pour le rétentat d'osmose inverse,
- un équipement de neutralisation (NL) comprenant une première entrée (31) pour le rétentat d'osmose inverse connectée à la deuxième sortie (23) de l'équipement d'osmose inverse, une deuxième entrée (32) pour une solution de neutralisation, et une sortie (33) pour le rétentat d'osmose inverse neutralisé,
- un équipement de nanofiltration (NF) comprenant une entrée (51) pour le rétentat d'osmose inverse neutralisé connectée directement à la sortie (33) de l'équipement de neutralisation ou indirectement par l'intermédiaire d'un équipement de séparation mécanique, une première sortie (52) pour le rétentat neutralisé de nanofiltration et une deuxième sortie (53) pour le perméat de nanofiltration,
- un deuxième équipement d'électrodialyse sur membrane bipolaire (EDBP) présentant une entrée (61) pour le perméat de nanofiltration et connectée à la deuxième sortie (53) de l'équipement de nanofiltration (NF), une première sortie (62) pour une solution acide, une deuxième sortie (63) pour une solution basique,
ledit système comprenant des moyens de recyclage comprenant tout ou partie des moyens suivants:
- un moyen (R1) reliant la première sortie (22) pour le perméat d'osmose inverse de l'équipement d'osmose inverse (OI) avec la deuxième entrée (12) du premier équipement d'électrodialyse (ED) destinée à recevoir l'eau de process et/ou,
- un moyen (R2) reliant la première sortie (62) pour une solution acide du deuxième équipement d'électrodialyse sur membrane bipolaire (EDBP) avec la deuxième entrée (12) du premier équipement d'électrodialyse (ED) et/ou,
- un moyen un moyen (R3) reliant la deuxième sortie (63) pour une solution basique du deuxième équipement d'électrodialyse sur membrane bipolaire (EDBP) avec la deuxième entrée (42) de l'équipement de neutralisation (NL) et/ou avec la première sortie (13) du premier équipement d'électrodialyse (ED).

## Patentansprüche

1. Verfahren zur Behandlung von Molke-Demineralisierungs-Abwässern, umfassend die folgenden Schritte:
i) Bereitstellung eines Molke-Demineralisierungs-Abwassers,
ii) Behandlung des in Schritt i) gewonnenen Abwassers durch Umkehrosmose, um ein Umkehrosmose-Permeat und -Retentat zu erhalten,
iii) Neutralisation des Umkehrosmose-Retentats auf einen pH-Wert zwischen 6 und 9,
iv) Nanofiltrationsbehandlung des neutralisierten Umkehrosmose-Retentats, um ein Nanofiltrations-Permeat, das einwertige Ionen enthält, und ein Nanofiltrations-Retentat, das zweiwertige Ionen und organische Reste enthält, zu erhalten,
v) Behandlung des in Schritt iv) erhaltenen Nanofiltrations-Permeats durch Elektrodialyse an einer bipolaren Membran, um wenigstens eine saure Lösung und wenigstens eine basische Lösung zu erhalten.

2. Verfahren nach Anspruch 1, **dadurch gekennzeichnet, dass** das Molke-Demineralisierungsabwasser eine Molke-Elektrodialysesole ist, vorzugsweise Süßmolke.

3. Verfahren nach Anspruch 1 oder 2, **dadurch gekennzeichnet, dass** Schritt ii) derart durchgeführt wird, dass ein Volumenkonzentrationsfaktor (FCV) im Retentat im Bereich von 3 bis 5 erreicht wird.

4. Verfahren nach einem der Ansprüche 1 bis 3, **dadurch gekennzeichnet, dass** die Neutralisation in Schritt iii) bei einem pH-Wert von 6,5 bis 9 durchgeführt wird und dass es auch einen Schritt der mechanischen Trennung des neutralisierten Retentats zur Entfernung des Tricalciumphosphatpräzipitats umfasst, wobei der Nanofiltrationsschritt iv) dann mit dem von Tricalciumphosphat freien Trennüberstand durchgeführt wird.

5. Verfahren nach einem der Ansprüche 1 bis 4, **dadurch gekennzeichnet, dass** Schritt v) der Elektrodialyse an einer bipolaren Membran derart durchgeführt wird, dass eine Leitfähigkeit des Permeats von 0,2 bis 1,2 mS/cm erreicht wird.

6. Verfahren zur Demineralisierung von Molke und zur Behandlung der anfallenden Abwässer, umfassend die folgenden Schritte:
a) Aufschäumen einer Molke,
b) Ansäuern der Molke auf einen pH-Wert zwischen 2,0 und 3,5,
c) Elektrodialyse der angesäuerten Molke,
d) Gewinnung der Elektrodialysesole und Durchführung eines Verfahrens zur Behandlung von Demineralisierungs-Abwässern nach einem der Ansprüche 1 bis 5, wobei das Demineralisierungs-Abwasser in Schritt i) die Elektrodialysesole ist.

7. Verfahren nach Anspruch 6, **dadurch gekennzeichnet, dass** es ferner einen Schritt umfasst, in dem die gesamte oder ein Teil der nach der bipolaren Membranelektrodialyse nach Schritt v) abgetrennten Säurelösung für die Ansäuerung von Molke nach Schritt b) wiederverwendet wird.

8. Verfahren nach Anspruch 6 oder 7, **dadurch gekennzeichnet, dass** es ferner einen Schritt der Rückführung der gesamten oder eines Teils der nach der bipolaren Membranelektrodialyse nach Schritt v) abgetrennten basischen Lösung zur Neutralisation des Retentats der Umkehrosmose nach Schritt iii) umfasst.

9. Verfahren nach einem der Ansprüche 6 bis 8, **dadurch gekennzeichnet, dass** es ferner einen Schritt umfasst, in dem das gesamte oder ein Teil des Umkehrosmose-Permeats aus Schritt ii) als Prozesswasser für Schritt c) der Elektrodialyse der angesäuerten Molke wiederverwendet wird.

10. Anlage, die sich zur Demineralisierung von Molke und zur Behandlung der anfallenden Abwässer eignet, wobei die Anlage umfasst:
- eine erste Elektrodialyseanlage (ED) mit einem ersten Einlass (11) zur Aufnahme der Molke, einem zweiten Einlass (12) zur Aufnahme des Prozesswassers, einem ersten Auslass (13) für die demineralisierte Molke und einem zweiten Auslass (14) für das Demineralisierungs-Abwasser,
- ein Abwasserbehandlungssystem, umfassend:
- eine Umkehrosmoseanlage (OI), umfassend einen Einlass (21) für das Demineralisierungs-Abwasser, der mit dem zweiten Auslass (14) der Elektrodialyseanlage verbunden ist, einen ersten Auslass (22) für das Umkehrosmose-Permeat und einen zweiten Auslass (23) für das Umkehrosmose-Retentat,
- eine Neutralisationsanlage (NL), die einen ersten Einlass (31) für das Umkehrosmose-Retentat umfasst, der mit dem zweiten Auslass (23) des Umkehrosmose-Reservoirs verbunden ist, einen zweiten Einlass (32) für eine Neutralisationslösung und einen Auslass (33) für das neutralisierte Umkehrosmose-Retentat,
- eine Nanofiltrationsanlage (NF), die einen Einlass (51) für das neutralisierte Umkehrosmose-Retentat umfasst, der direkt mit dem Auslass (33) der Neutralisationsanlage oder indirekt über eine mechanische Trennanlage verbunden ist, einen ersten Auslass (52) für das neutralisierte Nanofiltrations-Retentat und einen zweiten Auslass (53) für das Nanofiltrations-Permeat,
- ein zweites Gerät zur Elektrodialyse mit bipolarer Membran (EDBP), das einen Einlass (61) für das Nanofiltrations-Permeat umfasst und mit dem zweiten Auslass (53) der Nanofiltrationsanlage (NF) verbunden ist, einen ersten Auslass (62) für eine saure Lösung, einen zweiten Auslass (63) für eine basische Lösung, wobei das System Recyclingmittel umfasst, die alle oder einen Teil der folgenden Mittel umfassen:
- ein Mittel (R1), das den ersten Auslass (22) für das Umkehrosmose-Permeat der Umkehrosmoseanlage (OI) mit dem zweiten Einlass (12) der ersten Elektrodialyseanlage (ED) verbindet, die dazu bestimmt ist, das Prozesswasser aufzunehmen und/oder,
- ein Mittel (R2), das den ersten Auslass (62) für eine saure Lösung der zweiten bipolaren Membranelektrodialyseanlage (EDBP) mit dem zweiten Einlass (12) der ersten Elektrodialyseanlage (ED) verbindet und/oder,
- ein Mittel (R3), das den zweiten Auslass (63) für eine basische Lösung der zweiten bipolaren Membranelektrodialyseanlage (EDBP) mit dem zweiten Einlass (42) der Neutralisationseinrichtung (NL) und/oder mit dem ersten Auslass (25) (13) der ersten Elektrodialyseanlage (ED) verbindet.

## Claims

1. Method for treating whey demineralization effluents, comprising the following steps:
i) supplying a whey demineralization effluent,
ii) treating by reverse osmosis the effluent recovered in step i) so as to obtain a reverse osmosis permeate and retentate,
iii) neutralizing the reverse osmosis retentate to a pH of between 6 and 9,
iv) treating the neutralized reverse osmosis retentate by nanofiltration so as to obtain a nanofiltration permeate comprising the monovalent ions and a nanofiltration retentate comprising the divalent ions and the residual organic materials,
v) treating the nanofiltration permeate obtained in step iv) by electrodialysis with bipolar membrane, so as to obtain at least one acidic solution and at least one basic solution.

2. Method according to claim 1, wherein the whey demineralization effluent is a brine from electrodialysis of whey, preferably of sweet whey.

3. Method according to claims 1 or 2, wherein step ii) is carried out so as to obtain a concentration factor (CF) of 3 to 5 in the retentate.

4. Method according to one of claims 1 to 3, wherein the neutralization in step iii) is carried out to a pH between 6.5 and 9 and wherein it also comprises a step of mechanical separation of the neutralized retentate so as to remove the tricalcium phosphate precipitate, the step iv) of nanofiltration then being carried out on the separation supernatant free of tricalcium phosphate.

5. Method according to one of claims 1 to 4, wherein the step v) of electrodialysis with bipolar membrane is carried out so as to obtain a conductivity of the permeate of between 0.2 and 1.2 mS/cm.

6. Method for demineralizing whey and for treating the effluents produced, comprising the following steps:
a) supplying a whey,
b) acidifying the whey to a pH of between 2.0 and 3.5,
c) electrodialyzing the acidified whey,
d) recovering the electrodialysis brine and implementing a method for treating demineralization effluents according to one of claims 1 to 5, said demineralization effluent in step i) being said electrodialysis brine.

7. Method according to claim 6, wherein it further comprises a step of recycling all or part of the acidic solution which is separated out after electrodialysis with bipolar membrane according to step v), for acidification of the whey according to step b).

8. Method according to claims 6 or 7, wherein it further comprises a step of recycling all or part of the basic solution which is separated out after electrodialysis with bipolar membrane according to step v), for neutralization of the reverse osmosis retentate according to step iii).

9. Method according to one of claims 6 to 8, wherein it further comprises a step of recycling all or part of the reverse osmosis permeate from step ii), as process water for step c) of electrodialyzing the acidified whey.

10. Facility suitable for demineralizing whey and for treating the effluents produced, said facility comprising:
- a first electrodialysis (ED) device comprising a first inlet (11) intended to receive the whey, a second inlet (12) intended to receive the process water, a first outlet (13) for the demineralized whey, and a second outlet (14) for the demineralization effluent,
- an effluent treatment system comprising:
- a reverse osmosis device (OI) comprising an inlet (21) for the demineralization effluent connected to the second outlet (14) of the electrodialysis device, a first outlet (22) for the reverse osmosis permeate, and a second outlet (23) for the reverse osmosis retentate,
- a neutralization device (NL) comprising a first inlet (31) for the reverse osmosis retentate connected to the second outlet (23) of the reverse osmosis device, a second inlet (32) for a neutralization solution , and an outlet (33) for the neutralized reverse osmosis retentate,
- a nanofiltration device (NF) comprising an inlet (51) for the neutralized reverse osmosis retentate connected directly to the outlet (33) of the neutralization device or indirectly via a mechanical separation device, a first outlet (52) for the neutralized nanofiltration retentate, and a second outlet (53) for the nanofiltration permeate,
- a second electrodialysis device with bipolar membrane (EDBP) having an inlet (61) for the nanofiltration permeate and connected to the second outlet (53) of the nanofiltration device (NF), a first outlet (62) for an acidic solution, a second outlet (63) for a basic solution,
said system comprising recycling means comprising all or part of the following means:
- a means (R1) connecting the first outlet (22) for the reverse osmosis permeate of the reverse osmosis device (OI) with the second inlet (12) of the first electrodialysis device (ED) intended to receive the process water, and/or
- a means (R2) connecting the first outlet (62) for an acidic solution of the second electrodialysis device with bipolar membrane (EDBP) with the second inlet (12) of the first electrodialysis device (ED), and/or
- a means (R3) connecting the second outlet (63) for a basic solution of the second electrodialysis device with bipolar membrane (EDBP) with the second inlet (42) of the neutralization device (NL) and/or with the first outlet (13) of the first electrodialysis device (ED).
